# EUROPEAN PATENT APPLICATION

(11) **EP 0 657 812 A1**
(43) Date of publication of application: **14.06.1995**
(21) Application number: 94308251.1
(22) Date of filing: 09.11.1994
(51) Int. Cl.: G06F 11/00

(54) **System and method for monitoring library software**

(30) Priority: 03.12.1993 US 161967
(71) Applicant: International Business Machines Corporation, Armonk, N.Y. 10504 (US)
(72) Inventor: Fortin, Michael Richard, Austin, Texas 78759 (US); Urquhart, Robert John, Austin, Texas 78750 (US)
(74) Representative: Williams, Julian David

(57) **Abstract**

A method and system for enabling the monitoring of a shared library of software programs for executing on a computer system. The system enables monitor instrumentation of the library without recompiling the source code of the programs. Encapsulation of the library routines does not disrupt the relative addressing of the library routines since an instruction is simply replaced. A single demultiplexor entry for each library routine provides access to common instrumentation code and to user specified entry and exit routines for the particular library routine. Common instrumentation code and user specified entry and exit routines are not replicated when used to monitor a number of software programs. No instructions are added to the library routine. User specified entry and exit routines are used to collect selected performance and system state data. Instrumentation code is provided to link the library routines to the user specified entry and exit routines. The standard link interface allows the entry and exit routines to be written in high level languages.

## Description

The present invention relates to measuring the performance of computer systems.

Computer system performance, e.g. the speed of operation or the throughput of a system, is a function of the computer system hardware and the efficiency of the software used on the system. Performance can be enhanced by ensuring that the software is efficiently written to most effectively use the hardware or by modifying the hardware to enhance certain software function.

The identification of performance problems requires an ability to monitor the execution of software on a particular hardware system and to be able to identify those sections of the software that are consuming inordinate amounts of hardware resource. For example, the execution of a software program can be monitored to determine how much processing time is spent in each subroutine.

Tracing program execution and monitoring execution adds significant overhead to program execution. Thus, most software does not include monitoring function in its basic form. Software developers may add instructions to the software to monitor selected portions, but these instructions are typically removed before the final version is shipped to customers or placed in regular use.

Introduction of an existing program onto new hardware or perception of performance problems in new software may create a requirement to monitor software that does not contain any inherent monitoring capability. This creates a need to "instrument" the software to measure performance. Instrumentation of software refers to the process of enabling the software to be monitored at selected points to capture significant system state data at those points.

Historically, instrumentation of software was accomplished by modifying the source code for the software to include monitoring instructions, recompiling the source code, and then executing the modified software. The approach has the disadvantages of requiring access to source code (which may not be available for commercially purchased software), and being error prone if the person modifies the code incorrectly. In addition, this form of instrumentation may introduce performance problems itself causing the results to be misleading.

A second approach to instrumentation uses special purpose hardware to record access to certain computer system functions. A special monitor is connected to the computer to record changes in the physical state of the machine, e.g. when a signal is received on a certain line or when certain memory addresses are accessed. This approach has the disadvantage of requiring the special purpose hardware. It is also limited to those functions that cause a recognizable physical change to the hardware. The approach is costly and not generally applicable.

Yet another approach has been suggested in U.S. Patent Number 5,193,180 to Hastings. Hastings seeks to monitor memory access by expanding the program code to include specific monitoring instructions. Hastings avoids the need for source code by expanding relocatable binary files. However, the files to be expanded must have a full symbol table available because of the movement of relative locations due to the expansion. The technique is also not applicable to situations where the symbol table has been stripped from an executable object to save storage space. Finally, Hastings cannot be applied to an object already loaded into memory for execution due to the need to recalculate relative addresses.

Still another approach is suggested in co-pending US Patent application serial number 07/662,521. This method is non-invasive and does not require modifying the code being monitored. The system and method are implemented in a software program that samples instruction addresses to be executed by the system. Summarization of the number of times an address is referenced and correlation to the source code causing generation of that instruction provides statistics on the time the program spends in certain sections of code. This approach has the disadvantage of being limited to estimating time spent in code sections and not allowing collection of other system state information. It also requires the source code to be available to generate an assembly listing for address to code correlation.

Monitoring of entire libraries containing a large number of routines has typically required the insertion of monitoring code into each of the library routines. This process can be error prone and leads to large expanded libraries. In most cases the monitoring code for a library is essentially the same so storage of multiple copies of redundant code is inefficient.

A technical problem therefore exists to provide a means of instrumenting a program for user defined performance monitoring without access to the program source code and without requiring special purpose hardware monitors. A further problem exists to provide a process for efficiently monitoring a shared library of routines without inserting redundant code.

In accordance with the present invention, there is now provided a method for monitoring a plurality of software programs executable on a computer system, each of the software programs having a plurality of computer executable instructions, the computer system having memory and a processor, the method comprising the steps of: storing a plurality of monitoring programs for monitoring software execution, the plurality of monitoring programs each being placed at an addressable location in the memory; storing for each of the plurality of software programs a monitor translation entry for invoking the addressable monitoring program for the software program; and replacing one of the plurality of computer executable instructions in each of the plurality of software programs with an invocation of the monitor translation entry for that software program.

Viewing the present invention from another aspect, there is now provided a system for monitoring execution of a software routine on a computer system, the system comprising: storage means for storing data in the computer system; means for storing a plurality of monitoring programs at addressable locations in the storage means; means for associating one or more of the monitoring programs with the software routine; and means for modifying the software routine to invoke the associated monitoring programs.

The present invention thus provides a system and method for enabling monitoring of software performance without requiring access to the software source code.

The present invention also provides a system and method for efficiently instrumenting shared libraries of routines executing on a computer system. Furthermore, the present invention provides a system and method that enables instrumenting of shared libraries without requiring access to the library routine source code and without recompilation. Still furthermore the present invention provides a system and method for instrumenting shared library routines after those routines have been loaded for execution in a computer system.

Preferred embodiments of the present invention will now be described, by way of example only, with reference to the accompanying drawings, in which:
Figure 1 is a block diagram illustrating a computer system.
Figure 2 is a flow diagram illustrating the normal flow of control to and from a library routine.
Figure 3 is a flow diagram illustrating the flow of control in an instrumented library routine according to the present invention.
Figure 4 is a flowchart depicting the steps of the instrumentation process according to the present invention.
Figure 5 is a diagram illustrating the detailed flow of execution in a system according to the present invention.
Figure 6 is a diagram illustrating the layout of a shared memory segment used in the recording data in the present invention.

A preferred embodiment of the present invention operates on a computer system having a processing unit, system memory and various input/output and other peripheral devices. The preferred embodiment operates on and IBM RISC System/6000 computer running the AIX operating system. (IBM, RISC System/6000, and AIX are trademarks of the IBM Corporation.) It will be understood, however, that the invention can be implemented on other hardware platforms and on other operating systems.

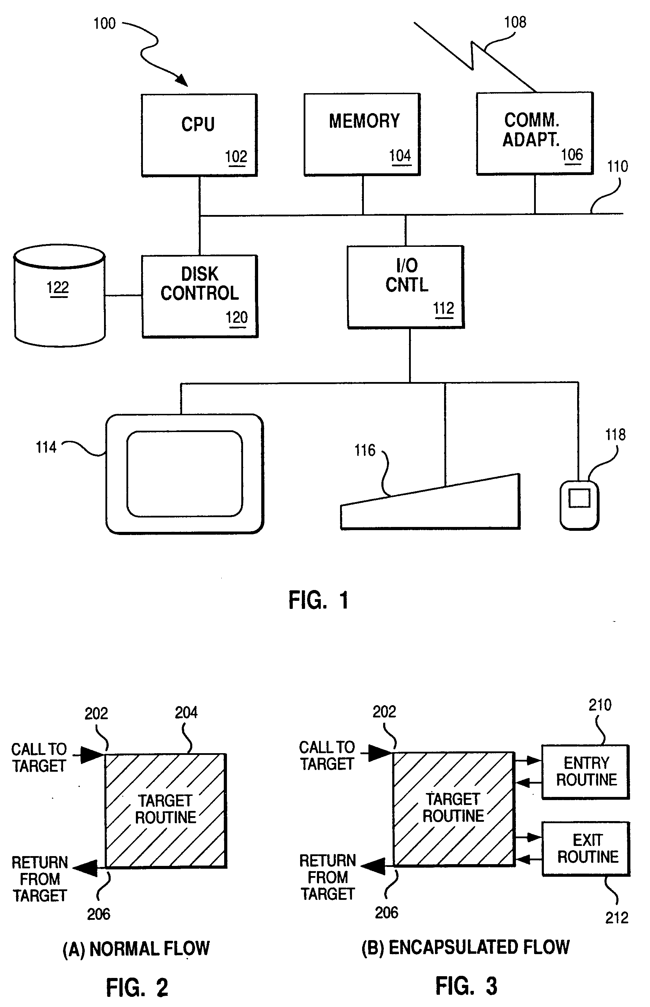

The preferred embodiment is implemented with a computer system having the components shown generally for the system **100** in Figure 1. Processing is provided by central processing unit or CPU **102**. CPU **102** acts on instruction and data stored in random access memory **104**. Long term storage is provided on one or more disks **122** operated by disk controller **120**. A variety of other storage media could be employed including tape, CD-ROM, or WORM drives. Removable storage media may also be provided to store data or computer process instructions. Operators communicate with the system through I/O devices controlled by I/O controller **112**. Display **114** presents data to the operator while keyboard **114** and pointing device **118** allow the operator to direct the computer system. Communications adapter **106** controls communications between this processing unit and others on a network to which it connected by network interface **108**.

Instrumentation of software leads to the monitoring of a "target routine", i.e. that portion of the software for which data is to be collected. The target routine can be a complete program, a subroutine of a program, or a routine from a routine library. A routine library or subroutine library is a collection of useful software that may be used by a programmer to accomplish a desired function without having to specifically create source code for the function. For example, various mathematical functions such as sine, cosine, tangent, etc. can be collected into a library of math routines. While a library usually includes a number of routines, the term is often used to refer to even a single routine designed to be called by another program. A shared library, once loaded, is accessible to many processes or users on the system.

Each target routine has one or more entry points and one or more exit points. A target routine is invoked or called by a previous routine. The processor will transfer control to the target routine entry point. Instructions from the target routine will be executed until an exit back to the calling routine is encountered. The target routine instructions may include an invocation of another subroutine. In some cases, control will transfer to another routine and will never be returned to the calling routine. The flow of control is illustrated in Figure 2. In Fig. 2 the "Call to Target" transfers control to the instruction at address **202**. Target routine instructions **204** are executed until control is returned to the calling program at **206**.

Enabling routine monitoring allows system state information to be collected at entry to the target routine and at exit from the routine. Entry and Exit monitoring provide statistics on how much time is spent in any routine and an ability to determine what changes to the system are caused by that routine. The flow of control after instrumentation according to the present invention is shown in Figure 3. The Call to Target still points to address **202**. After **202**, however, control is passed to Entry Routine **210**. Entry Routine **210** collects the information desired by the monitor and returns control to the target routine. Upon Exit from the Target Routine, control is passed to an Exit Routine **212** that collects additional data.

The present invention permits the Entry and Exit Routines to be written in a high level language such as C thereby making monitoring easier for the average programmer. This flexibility allows the programmer to collect precisely the information needed without introducing a great deal of complexity into the monitoring process. Within the Entry and Exit routines, the programmer can direct the system to send data to a printer, to a file, to the console, or to a shared memory segment. The routines also allow the function of a library member to be fully replaced such that newly provided code will be executed instead of the base code in the library being monitored.

An example of a shared memory segment for collecting monitor events is shown in Figure 6. The shared memory segment **600** is an allocated area in the system memory that is defined as accessible to multiple processes. The segment preferably includes a header area **602**, a counter area **604** for recording counts of selected events, and a event area **606** for recording a number of monitor events. The size of the memory segment is alterable based on the user requirements. The size allocated determines the total number of monitor events that can be captured in event area **606**. Although this shared segment structure is preferred, other structures can be used within the scope of the invention.

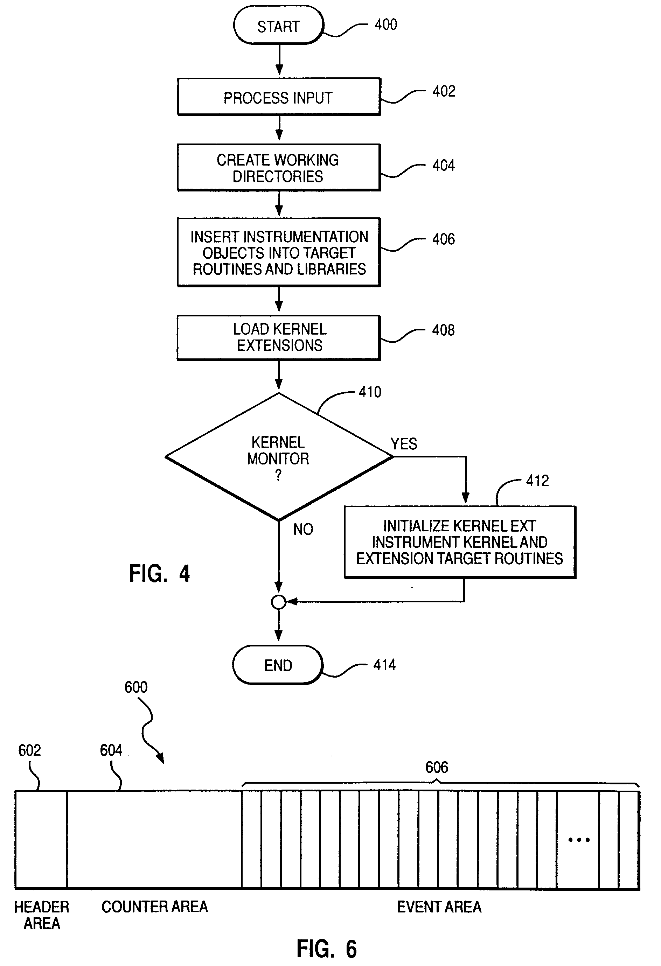

The system and method of the present invention enable software monitoring by instrumenting the target routines selected by the user. The system and method perform the necessary target routine modifications thereby eliminating potential errors caused by incorrect manual modifications. Figure 4 is a flowchart depicting the steps in instrumenting a target routine or library of target routines according to the present invention.

The user invokes the present invention by specifying the target routines and type of monitoring. This information leads to the Start of processing **400**. The input is processed **402** to determine the actions required. Working directories for holding modified target routines are created **404**. Next, instrumentation objects are inserted into the target routines and libraries **406**. Kernel extensions are loaded **408**. The kernel extensions allow certain forms of processing to be employed.

The insertion of instrumentation objects, step **406** involves modifying the software to cause execution of the entry and exit routines specified by the user. The preferred embodiment of the present invention is particularly suited to instrument programs following the C language linkage conventions. Programs written in languages other than C often follow these conventions. Instrumentation of the software is accomplished, in part, by changing portions of the executable code. The changed portions are identified by analysis of the linkage conventions. Executable software embodying linkage conventions other than the C linkage conventions may be instrumented using this technique. Extension of the preferred embodiment to these other linkage cases can be accomplished using known techniques.

The method of instrumenting a target routine depends on the type of target routine. Instrumentation of executable programs that have not been stripped of their symbol table ("unstripped routines") will be described first. Descriptions for instrumentation of stripped routines will follow.

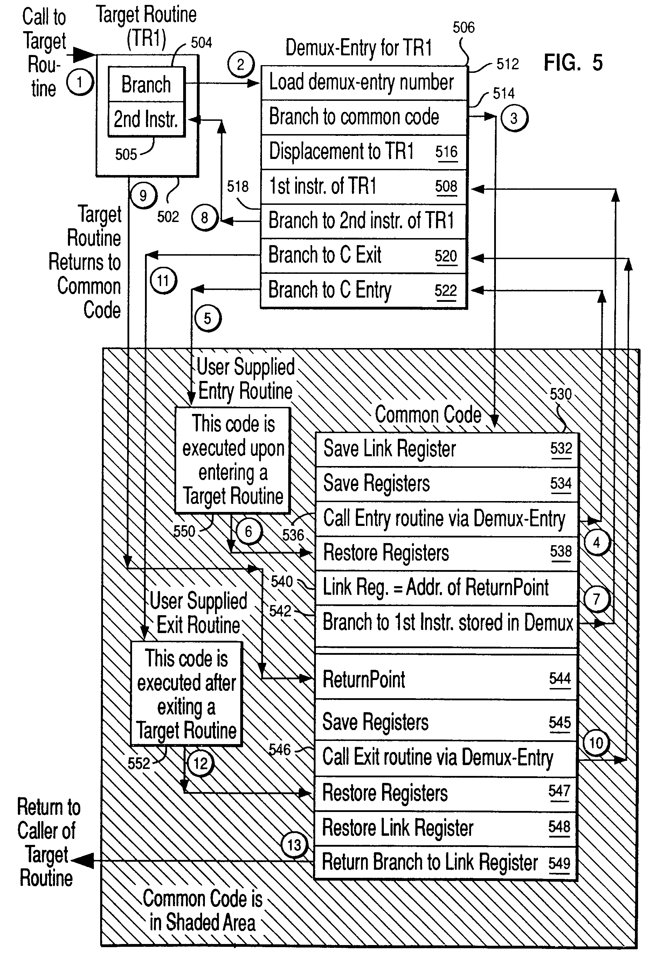

The general flow of an instrumented target routine is shown in Figure 5. A target routine **502** is instrumented or encapsulated by causing the routine to branch to the instrumentation or monitor code.

Instrumentation of a library of routines poses several unique problems. The person desiring to monitor a library typically plans to collect the same data on the execution of each routine. Prior art systems required code for collecting that data to be inserted into each of the library routines. Even in the commonly assigned related application instrumentation of a shared library required instrumentation library code to be linked with the target routine. Inclusion of the monitoring code with each target routine greatly expands the size of the library and creates a problem of ensuring that the correct level of monitoring code is included. Modification of the monitoring code requires reconstructing the entire monitored library.

The present invention solves this problem by introducing a demultiplexor instrumentation function. The demultiplexor directs a target routine monitor request to common instrumentation code which in turn calls the appropriate entry or exit monitoring routine. The demultiplexor function provides a means for inserting minimal code into the target routine thereby saving library space and decreasing the instrumentation effort required.

A demultiplexor entry according to the present invention is illustrated at **506** in Figure 5. The demux entry contains a load demux-entry number **512**, an instruction **514** causing a branch to common instrumentation code **530**, a number **516** representing the displacement from the demux entry to the target routine, the first instruction **508** of the target routine, a branch **518** to the second instruction **505** of the target routine, a branch instruction **520** to the user supplied exit routine **550**, and a branch instruction **522** to the user supplied entry routine **552**. The demux entry comprises six instructions and one integer value. In the preferred embodiment this results in a demux entry of only 28 bytes. The provision of one demux entry per library routine therefore adds very little overhead. Each added routine adds only 28 bytes to the overall size after the common code is added.

Instrumentation of an unstripped routine preferably links the common instrumentation code with the shared library. This allows the library and the instrumentation code to use the same Table of Contents or TOC and removes the requirement of creating a separate Table of Contents for the instrumentation code thereby saving space. Library routines must first be extracted from the library archive and linked with the instrumentation code. Once instrumented, the library routines must be archived back into the library.

The instrumentation routine then locates the first instruction of each library routine and copies it to the demux entry for that routine at **508**. The first instruction of the routine is replaced with a branch instruction **504** to the instrumentation code demultiplexor (demux) entry **506**.

The flow of execution in an instrumented system is as follows:
A library routine is called by another program. The first instruction encountered is a branch to the demux entry **504**. Demux entry **506** contains a branch instruction **514** to the common instrumentation code **530**. The common instrumentation code **530** saves the link register **532**, saves the other registers **534**, and calls **536** the user supplied entry routine **550** by using the demux entry **520** to branch to the entry routine. Upon completion of the entry routine **550** processing, control returns to the common instrumentation code at **538**. The registers are restored **538**, the link register is set to the address of a return point in the instrumentation code **540**. A branch to the first library routine instruction **508** (stored in the demux entry) is executed **542** and control returned to the library routine second instruction **505**. Upon completion of library routine processing, control returns to the instrumentation routine return point **544**. The registers are saved **545** and a branch made to the exit routine **552** using the demux entry **522**. The exit routine **552** collects data requested on exit and returns control to the instrumentation code at **547**. The registers are restored **547**, the original link register restored **548**, and a branch is taken back to the address specified in the link register **549**.

User supplied routines **550**, **552** can be written in C or other high level language and can capture any required system state information. An ability to set and monitor a timer allows the entry/exit routine combination to collect data on the amount of time spent in each routine.

Stripped executable modules cannot be linked with the instrumentation code. Instrumenting of stripped library routines therefore requires a slightly different approach. The instrumentation code **530** is stored in a library of entry and exit routines. Each of the library instrumentation routines, in turn, invokes a user supplied entry or exit routine for collecting data. The loader section of the library routine is modified to create a dependency on the newly created instrumentation library and to cause that library to be loaded prior to executing the first instruction of the library routine.

The text section of the library routine is expanded to include a demux entry for calling the instrumentation library routines. The stripped routine demux entry is larger than the demux entry for unstripped routines. The stripped demux entry contains instructions for saving the registers and for calculating the addresses of the common code and user supplied entry and exit routines. Demux entries in the preferred embodiment contain 34 instructions and two integer data items totalling 144 bytes. Other implementations having different numbers of instructions and data could be implemented within the scope of the invention. The data section of the library routine is expanded to provide storage for TOC entries of the instrumentation library making them addressable from the library routine. The first instruction of the library routine is copied to a specific offset within the inserted demux entry. A branch from the library routine to the entry section of the demux entry replaces the first instruction of the library routine. The flow of execution is then as described above.

The only modification to the library routine is the replacement of the first instruction by a branch instruction. The demux entry is appended to the target routine but does not expand or disrupt the instruction sequence of the target routine.

## Claims

1. A method for monitoring a plurality of software programs executable on a computer system, each of the software programs having a plurality of computer executable instructions, the computer system having memory and a processor, the method comprising the steps of:
storing a plurality of monitoring programs for monitoring software execution, the plurality of monitoring programs each being placed at an addressable location in the memory;
storing for each of the plurality of software programs a monitor translation entry for invoking the addressable monitoring program for the software program; and
replacing one of the plurality of computer executable instructions in each of the plurality of software programs with an invocation of the monitor translation entry for that software program.

2. A method as claimed in claim 1, comprising the steps of:
executing one of the software programs;
accessing the monitor translation entry to determine the address of the associated monitoring program;
executing the monitoring program;
returning execution control to the software program.

3. A method as claimed in claim 1, wherein the plurality of monitoring programs include common monitoring programs common to all of the software programs and entry/exit monitoring programs for performing monitoring actions for one or more of the software programs, and wherein the step of storing for each of the plurality of software programs a monitor translation entry comprises the steps of:
determining the common monitoring program address;
receiving an indication of which of the entry/exit monitor programs are associated with the software program;
determining the addresses of the associated entry/exit monitor programs; and
storing a monitor translation entry containing an invocation of the common monitor program and an address for each of the entry/exit monitor programs.

4. A system for monitoring execution of a software routine on a computer system, the system comprising:
storage means for storing data in the computer system;
means for storing a plurality of monitoring programs at addressable locations in the storage means;
means for associating one or more of the monitoring programs with the software routine; and
means for modifying the software routine to invoke the associated monitoring programs.

5. A system as claimed in claim 4, wherein the means for associating the monitoring programs associates a first monitor program for common routine processing and associates a plurality of entry/exit monitor programs for monitor activities, and wherein the system further comprises:
means for causing the first monitor program to invoke the addressable entry/exit monitor programs.

6. A system as claimed in claim 4, further comprising:
means for collecting data generated by the monitoring programs.
